# EUROPEAN PATENT APPLICATION

(11) **EP 2 469 898 A1**
(43) Date of publication of application: **27.06.2012**
(21) Application number: 10306502.5
(22) Date of filing: 23.12.2010
(51) Int. Cl.: H04W 8/18

(54) **Enabling change of subscriber identity module**

(71) Applicant: Alcatel Lucent, 75007 Paris (FR)
(72) Inventor: Conte, Alberto, 91620, Nozay (FR); Chakri, Al Mahdi, 91620, Nozay (FR); Thomas, Laurent, 91620, Nozay (FR)
(74) Representative: El Manouni, Josiane

(57) **Abstract**

In an embodiment, there is provided a method for enabling change of Subscriber Identity Module SIM, said method comprising:
- a SIM selector module supported by an Integrated Circuit Card ICC performing SIM selection among multiple SIMs supported by said ICC, based on SIM selection rules stored in said ICC.

## Description

The present invention generally relates to mobile communication systems.

Descriptions of mobile communication systems can be found in the literature, such as literature published by standardisation bodies, such as for example 3GPP (3^{rd} Generation Partnership Project).

In such systems, access by a terminal to services provided by a mobile network requires subscriber data to be stored on the terminal side. Such subscriber data establish relationship between subscriber and mobile network operator. Such subscriber data are generally stored in a Subscriber Identity Module SIM supported by an Integrated Circuit Card ICC associated with the terminal.

It is important to enable change of SIM, particularly taking into account that subscription relationships may have to change over time for various reasons. It is also important that such change of SIM be simple, easy and flexible, particularly from subscriber or end-user standpoint.

The present invention in particular addresses such needs.

These and other objects are achieved, in one aspect, in an embodiment, by a method for enabling change of Subscriber Identity Module SIM, said method comprising:
- a SIM selector module supported by an Integrated Circuit Card ICC performing SIM selection among multiple SIMs supported by said ICC, based on SIM selection rules stored in said ICC.

These and other objects are achieved, in other aspects, by entities for performing such method, such as in particular Integrated Circuit Card ICC supporting SIMs, and management server.

Some embodiments of apparatus and/or methods in accordance with embodiments of the present invention are now described, by way of example only, and with reference to the accompanying drawings, in which:
- figure 1 illustrates an example of a system for enabling change of SIM according to an embodiment of the invention,
- figure 2 illustrates an example of SIM selection rules update procedure.

In current mobile networks (WCDMA/3G, LTE), the authentication of a user+terminal (usually referred to as User Equipment UE) is performed through a Universal Integrated Circuit Card (UICC), a smart card (often a Java card) which is inserted is the terminal. On the UICC runs (among others) a specific application called Universal Subscriber Identity Module USIM) in charge of handling the UE authentication.

The USIM securely stores (on the UICC) user subscriber information, authentication information and provides storage space for e.g. text messages and phone book contacts. More precisely the UICC/USIM contains its unique serial number, internationally unique number of the mobile user (IMSI), security authentication and ciphering information, temporary information related to the local network, a list of the services the user has access to and two passwords (PIN for usual use and PUK for unlocking).
- The IMSI (International Mobile Subscriber Identity) is a unique number associated with all UEs. An IMSI is usually 15 digits long, but can be shorter (for example MTN South Africa's old IMSIs that are still being used in the market are 14 digits). The first 3 digits are the Mobile Country Code (MCC), and is followed by the Mobile Network Code (MNC), either 2 digits (European standard) or 3 digits (North American standard). The remaining digits are the Mobile Station Identification Number (MSIN) within the network's customer base.
- For authentication purposes, the USIM stores a long-term pre-shared secret key K, which is shared with the Authentication Center (AuC) in the network (e.g. HLR). The USIM also verifies a sequence number that must be within a range using a window mechanism to avoid replay attacks, and is in charge of generating the session keys CK and IK to be used e.g. in the confidentiality and integrity algorithms of the KASUMI block cipher in UMTS.

The USIM represent the UE as a subscriber of a specific Mobile Network Operator, specified by the Mobile Network Code (MNC) in the IMSI.

Additionally, an UICC of a 3G mobile phone can contain an ISIM: IP Multimedia Services Identity Module . An ISIM contains parameters for identifying and authenticating the user to the IP Multimedia Subsystem (IMS). The ISIM application can co-exist with SIM and USIM on the same UICC making it possible to use the same smartcard in both GSM networks and UMTS networks.

Among the data present on ISIM are a IP Multimedia Private Identity (IMPI), the home operator domain name, one or more IP Multimedia Public Identity (IMPU) and a long-term secret used to authenticate and calculate cipher keys. The first IMPU stored in the ISIM is used in emergency registration requests.

On a physical UICC several applications (applets) can be "installed" and run. The USIM and ISIM are examples of such applets.

Each application on the UICC (smart card) has its own secure environment: an application on a UICC cannot access protected data of another application on the same UICC.

For more detail, one may refer for example to following 3GPP Technical Specifications:
- 3GPP TS 31.101- UICC-terminal interface; Physical and logical characteristics,
- 3GPP TS 31.102 - Characteristics of the Universal Subscriber Identity Module (USIM) application
- 3GPP TS 22.038 - USIM Application Toolkit (USAT); Service description; Stage 1,
- 3GPP TS 31.103 - Characteristics of the IP Multimedia Services Identity Module (ISIM) application.

In other words, in current mobile networks (WCDMA/3G, LTE), a subscriber is uniquely identified by a mobile network operator through a SIM card or, more precisely, a UICC (Universal Integrated Circuit card) with the USIM application running on it. This smart card is generally preconfigured and furnished by the MNO to subscribers, it actually holds the subscribers credentials that allows the MNO to authenticate and authorize the subscribers each time they connect to the network.

This exclusive one-to-one relationship between the UICC and an MNO appears though to be rigid and reach its limits in number of situations, especially when there are several network operators and/or services providers involved and not only one, which is the classic deployment case for which the UICC was designed. Here are some use cases that shows the limit of the current UICC model:
A. A device manufacturer wishing to offer wireless services to its devices, but for strategic reasons it can't be bound to a single operator. If the device manufacturer deploys all its devices with a certain UICC from a certain MNO it would be very heavy / impossible to change this MNO in case there is a better offer from another one. And this is due to the fact that the device manufacturer would have to change all the UICCs in all the deployed devices. Having the flexibility to change the MNOs without touching the devices would allow the device manufacturer, in one hand to put competition between mobile operators and to change his partner MNO if/when needed. Few examples
   o a car with sophisticated navigation system: for example BMW or Renault don't want to be bound to a given operator
   o a GPS with a 3G/LTE-chipset inside to receive e.g. traffic information real-time: the owner very often just pays a monthly fee to the GPS manufacturer (e.g. TomTom or Garmin) without knowing through which MNO the connection is established (the manufacturer handles the deal with the MNO); e.g. TomTom or Garmin don't want to be bound to a given operator
   o a 3G/LTE-enabled photo camera able to wirelessly upload photos and videos to some Internet server: for example Canon or Nikon don't want to be bound to a given operator
B. For M2M or Machine-Type devices whom owners whish to benefit of competition among MNOs. Few examples:
   o vending-machine able to with alert via e.g. an SMS when a specific product is not available
   o fire alarms
   o temperature/pressure/pollution sensors
   o smart meters
C. For MVNOs that want to reduce roaming cost by having the flexibility to change the serving mobile operators when their users are roaming, since they will be connected through a local MNO
D. For users whishing to benefit of cellular services even in countries where their Home MNO does not have roaming agreement, or simply to reduce roaming costs by changing serving operator when moving in foreign countries.

In all these cases a key issue is the lack of the ability of changing the serving Mobile Network Operator in a simple and flexible way, while still using the standard UICC/USIM model for authentication. It can be noted that in most cases (A and B) the SIM (UICC) is not accessible to the end-user for security reasons it is sold internally to the device. This makes the possibility to replace the SIM (UICC) impossible in most cases.

One problem is thus, how to easily change the serving mobile network operator (according to different rules) without replacing the UICC inserted in the device.

A similar problem applies also in case of IMS services, for which the authentication is based on the ISIM application also running on the UICC.

Usually there is only a single USIM (and IMSI) for each UICC.

For usual devices (e.g. mobile phones or smart-phones) changing of serving MNO (a.k.a. Home MNO) can be easily achieved by replacing the SIM card of operator 1 (UICC_{MNO1}) with one of operator 2 (UICC_{MNO2}). Unfortunately this solution cannot be used with devices where removing/replacing the UICC is not possible as e.g. a GPS navigator or some embedded system.

As recalled above, on a physical UICC several applications (applets) can be "installed" and run. The USIM is an example of such applets.

Embodiments of the present invention exploit the fact that on a UICC it is possible to have several USIMs (each with specific IMSI+Keys or credentials) and/or several ISIMs. This is a very interesting feature enabling a wide set of possible services.

In the following, embodiments will be described, focusing on the USIM case. Of course the same concepts applies and extends to the multiple ISIMs case.

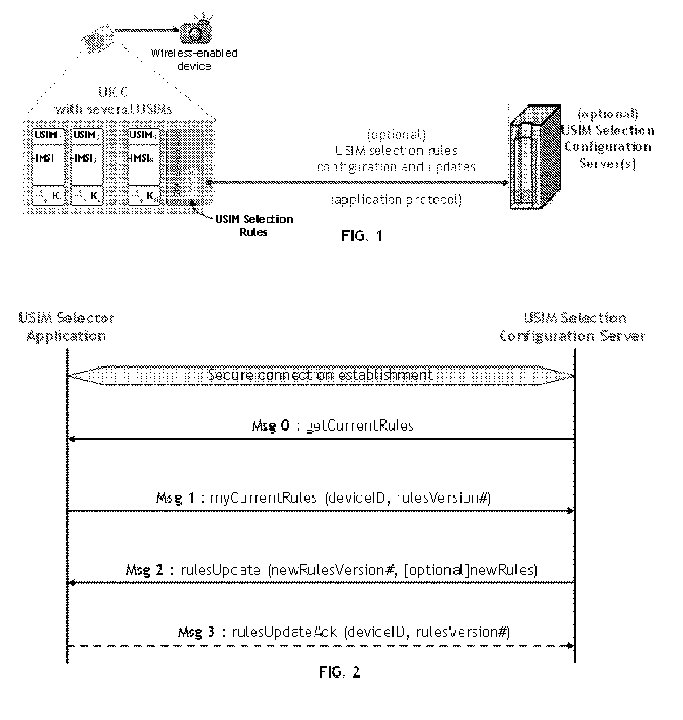

Embodiments of the present invention include several functionalities, some of them optional (as illustrated by way of example in Figure 1):
- installing /configuration of several USIMs on the same UICC; the USIMs can be pre-installed/configured (e.g. by the UICC supplier at UICC creation) and/or added later through a remote mechanism,
- specific USIM Selector Application (applet) running on the UICC and in charge of selecting/managing the different USIMs by following a wide range of rules (here called USIM Selection Rules);
- (optional) one or several functional USIM Selection Configuration Server(s) (that can be standalone, collocated or running on another Network Element or Server) in charge of configuring and updating the selection rules used by the USIM Selector Application.

The dialog between USIM Selector Application and USIM Selection Configuration Server can be both push-based (the Server sends updates notifications to the Application) and pull-based (the Application asks the Server for updates).

The USIM Selector Application is able to:
- Juggle among several USIMs (N_{USIM}), even more than 2
- Use selection rules that go beyond just pure location, including (see embodiments) day time, events, traffic type, server notifications...
- Get updated selection rules, from the USIM Selection Configuration Server, in both push and pull mode. Such update may also include a notification of new USIMs available on the UICC (for example as a result of a remote USIM configuration)
- Modify the Home MNO, per country
- Deprecate some of the USIMs installed on the UICC (i.e. no longer use them)
- Provide a sort of Fall-back MNO in case the Home MNO in a given country fails (overload, failure...)

Similarly, in the case of ISIMs, the same idea applies with:
- Several ISIMs per UICC
- A ISIM Selector Application (that can be monolithic with the USIM Selector Application or a different applet)
- ISIM Selection Rules (in the same "file" with the USIM Selection Rules or in a different one)
- ISIM Selection Configuration Server (monolithic with a USIM Selection Configuration Server, or co-located, or on different physical machines) working in push and/or pull mode

Several embodiments will be described hereinafter.

### Embodiment 1 - Basic (static) version

A special (yet standard compliant) UICC is "hosted" (sold or inserted) on a target device. This special UICC has specific aspects (as illustrated for example in Figure 1):
- Several valid USIMs (compliant to standards) installed/configured on the UICC that can be used to correctly authenticate the device with several MNOs. The USIMs can be pre-installed/configured (e.g. at UICC creation) and/or added later through a remote mechanism.
   o There can be USIM with different MCCs and MNCs (each corresponding to a specific MNO for a given country). There can be several USIMs with the same Country Code (e.g. France [208], Italy [222], USA [310..316], UK [234..235], or even International [901]) and different MNCs (that allow to change of Home MNO in a given country). There can be also several USIMs with same MCC and MNC but different MSINs.
- An application (applet) running on the UICC, called here USIM Selector Application, in charge of selecting/managing the different USIMs. The USIM Selector Application applies a set of USIM Selection Rules stored locally on the UICC (on the storage space of the USIM Selector Application) and listing all the selection rules to be applied.
   o The selection rules can be based on several factors/triggers (see embodiment 4): device location, available PLMN, time (day, hour, date...), notifications/requests from external servers (see Embodiment 2)...
   o The format of the rules can be for example simple text, html, xml, or any other proprietary or open format adapted to the needs of describing rules.

In a basic version, the UICC is completely configured (USIMs + USIM Selection Rules) before first usage. The selection rules cannot be changed. It is a static solution.

### Note:

This basic version can be used to offer services like roaming with selection of different operators for different countries, or e.g. to put in place some (static) round-robin selection of MNOs (USIMs) in a given country (to distributed traffic across several MNOs).

It can be noted that even if this first version may not be extremely interesting (because of its static nature) it already offers to the customer major flexibility than current "legacy" model with one single USIM per UICC.

### Embodiment 2 - Enabling online USIM Selection Rules updates

As described in the first embodiment the proposed system offers the ability to select a certain USIM based on a set of predefined rules. The system allows also updating and modifying these rules using one or several servers called here USIM Selection Configuration Server (USCS).

The USIM Selection Configuration Server dialogs with the UICC embedded USIM Selection Application either directly or through a management software application (the two options are detailed later). This dialog will be using a protocol, and allows to configure, update and modify the USIM Selection Rules. The USIM Selection Configuration Server can dialog with several UICCs.

The USIM Selection Configuration Server is a functional element of the proposed system. It can be standalone, collocated with other functional elements or running on another Network Element or web-server.

There can be several USCS that can dialog with the USIM Selector Application. The selection of the server can be performed using different techniques such as DNS resolution, OMA-DM configuration or download during AAA exchange (e.g. through Radius or Diameter).

The dialog between the USIM Selector Application (in the UICC) and the USIM Selection Configuration Server can be performed in several fashions:
- Option 1: in this option the dialog between the UICC (USIM Selection Application) and the USCS will be performed directly over the air using the 3G/LTE or WiFI interface of the device containing the UICC
- Option 2: by connecting the device hosting the UICC to a PC (via a USB cable for instance), or physically inserting the UICC on a smart card reader/writer and running a rules update procedure. Several types of connections can be used to connect the device (UICC) to the PC hosting the software managing the updates, for example:
   o USB cable
   o WiFi connection if the device on which the UICC is hosted is WiFi capable
   o Bluetooth
   o Or any near filed communication technology
- Option 3: similar to option 2 but where an additional management software application installed in the PC (a la iTunes) handles the exchanges between the user device and the USIM Selection Configuration Server.

The update procedure simply includes downloading the updated selection rules file that will replace the one old one.

The update/modification of the USIM Selection Rules can be triggered either by the user or by the server. In other words it can be either "push" based, in this case the update procedure is triggered by the server (the Server sends updates notifications to the Application) or it is "pull" based (in that case the update procedure is initiated by the device, with or without explicit request from the user).

The protocol used between UICC (USIM Selection Application) and the server is at application layer.

Previous to any exchange, a secure connection must be established between the device (i.e. USIM Selector Application) and the updates server (USIM Selection Configuration Server). Establishing such secure connection may include: use of certificates, use of login/pwd, use of a special dedicated USIM, proprietary mechanisms. The secure connection can be an encrypted tunnel (e.g. an IPSec tunnel).

When it works in pull mode it is composed of two mandatory messages + an optional ack (see Figure 2):
- Msg1 (myCurrentRules): used by the USIM Selection Application to provide its current version of the USIM Selection Rules and thus implicitly request a new version if available. This message transports
   o a mean to identify the device, could be an ISIM, and MS-ISDN, or any other ID ((devicelD)
   o a versioning number of the rules currently installed in the device (rulesVersion#) and/or a description of the rules currently installed (not shown in Fig. 2)
- Msg 2 (rulesUpdate): carrying the new rules from the USIM Selection Configuration Server (when new rules are available). It contains:
   o a versioning number of the new rules (newRulesVersion#). Note that if this field is empty (or is identical to the rulesVersion# already installed) than no new rules are available
   o the new rules if any (newRules)
- (optional) Msg 3 (rulesUpdateAck): used when the acknowledged mode is active (see below)

When the system works in pull mode an additional (optional) message is introduced (see Figure 2):
- Msg 0 (getCurrentRules) : used by the USIM Selection Configuration Server to request the USIM Selector Application to send the version number of the currently installed rules, so that the Server can decide if an update is needed.

Note that in pull mode the USIM Selection Configuration Server can skip Msg 0 (and Msg 1) and directly send the new USIM Selection Rules through Msg 2.

As shown in Figure 2 exchanges can be:
- (default case) acknowledged (e.g. three-handshake: request - response - ack) ensuring correct update / configuration even in case of connection instabilities/errors
- not acknowledged, for non critic configuration/updates

### Embodiment 3 - Enabling offline selection rules updates

The update and modification of the selection rules used by the USIM Selector Application can be performed also in an offline fashion. This means that upon user request (that can be done by calling the service provider or sending a request on its web site) the service provider sends the update selection rules to the user (by email, or on a physical support such as a CD/DVD or an SD card). And then the user will be able to export or install these data on his device, and update the selection rules of his UICC.

Note that this solution is less elaborated that the ones presented in the embodiment 2, and heavier to put in place, but it may be an alternative that can be used in updating the selection rules.

### Embodiment 4 - Selection strategies

A system from embodiments 1, 2 or 3 whereas the USIM Selector Application applies specific configured rules, USIM Selection Rules, to juggle among several USIMs (N_{USIM}) installed on the UICC. A wide range of rule types can be defined.

The following types of rules are examples important to be mentioned (which can be combined each other for complex strategies):
- Location based: allowing to modify the USIM to be used depending on the location of the device (e.g. USIM-Orange in France, USIM-TIM in Italy)
- Time based: this kind of rules modify the USIM to be used depending on the time (day, hour, week...). For example it may instruct the USIM Selector Application to select USIM_{MNO1} on mon-fri and USIM_{MNO2} on week-end, and this for the same country
- Event based: grouping rules based on some event (e.g. reception of a SMS, low radio signal strength, availability of femto, signal loss...). For example a "back-off usim" maybe activated if network access offered by the primary MNO failed.
- Traffic/application based: associating the USIM to be used with the type of traffic / application used. For example it may select USIM_{MNO1} for voice and USIM_{MNO2} for MTC/M2M
- External trigger/request based: the modification of selected USIM is driven by the request of an external entity (see embodiments 4 for the USIM Selection Configuration Server)

The USIM Selector Application also maintains a "classification" of the installed USIM, as for example:
- Active/Primary USIM (per country)
- Available USIMs (i.e. valid but not currently active)
- (optional) Fall-back/Secondary USIM (per country)
- Deprecated USIM: USIM that shall no longer be used (e.g. the agreement with the associated MNO as been withdrawn)

### Embodiment 5 - USIM Selection Rules management (configuration, update...)

An important aspect for embodiments 2, 3 and (in some case) 4 is the ability to modify the USIM Selection Rules. Several strategies can be used to trigger an update of these rules. Some of them (by way of example only):
- Simply rely on the device owner action, which from time to time trigs the update (e.g. plugs the device on a PC [embodiment 2] or starts an update [embodiment 3]).
- Time based update, e.g. each month. For example in the embodiment 3 the USIM Selector Application can contact (pull model) the USIM Selection Configuration Server each month to see if there is an updated version of the rules. Push mode works in a similar way. For an embodiment 2, the device may signal to the device owner that it is time to check for an update

- Connection based: e.g. each time the user switches-on the device the USIM Selector Application contacts (pull model) the USIM Selection Configuration Server to check for an update.
- Location based: the update is triggered depending on the location of the terminal
- Server push: the update is pushed "asynchronously" (i.e. not in a scheduled way) from the USIM Selection Configuration Server to the USIM Selector Application.

Combination of the above strategies is also possible.

### Embodiment 6 - ISIM case

The above embodiments can be easily translated and applied to the case of multiple ISIMs (instead of USIMs) in the UICC. Multiple ISIMs and multiples USIMs can co-exist in the same UICC.

Similarly to the USIM case, in the case of ISIMswe have:
- Several ISIMs per UICC
- A ISIM Selector Application (that can be monolithic with the USIM Selector Application or a different applet)
- ISIM Selection Rules (in the same "file" with the USIM Selection Rules or in a different one)
- One or several ISIM Selection Configuration Servers (monolithic with a USIM Selection Configuration Server, or co-located, or on different physical machines)

Embodiments of the present invention include a method for enabling change of Subscriber Identity Module SIM, said method comprising:
- a SIM selector module supported by an Integrated Circuit Card ICC performing SIM selection among multiple SIMs supported by said ICC, based on SIM selection rules stored in said ICC.

In an embodiment, said method comprises:
- configuring and/or updating said SIM selection rules.

In an embodiment, said method comprises:
- said ICC interacting with a remote server for said configuration and/or updating.

In an embodiment:
- said SIM selection rules include rules based one or more of different criteria including location-based, time-based, event-based, traffic/application- based criteria.

In an embodiment, said method comprises:
- triggering said configuration and/or updating according to one or more of different strategies including: relying on action of the owner of the device hosting said ICC, time-based update, connection-based update, location-based update, server-push update.

In an embodiment:
- said ICC corresponds to Universal Integrated Circuit Card UICC, and said Subscriber Identity Modules SIMs include Universal Subscriber Identity Modules USIMs and/or IMS Subscriber Identity Modules ISIMs.

In addition to a method for enabling change of SIM (examples of which have been decribed above), embodiments of the present invention also include different apparatus comprising means for performing such method, such as in particular ICC supporting SIMs, and management server.

Embodiments of the persent invention include an Integrated Circuit Card ICC supporting multiple Subscriber Identity Modules SIMs and comprising:
- a SIM selector module performing SIM selection, based on SIM selection rules,
- means for storing said SIM selection rules.

In an embodiment, said ICC comprises:
- means for configuring and/or updating said SIM selection rules.

In an embodiment, said ICC comprises:
- means for interacting with a remote server for said configuration and/or updating.

Embodiments of the present invention include a management server comprising:
- means for interacting with an Integrated Circuit Card ICC supporting multiple Subscriber Identity Modules SIMs, for configuration and/or updating of SIM selection rules stored in said ICC.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for enabling change of Subscriber Identity Module SIM, said method comprising:
- a SIM selector module supported by an Integrated Circuit Card ICC performing SIM selection among multiple SIMs supported by said ICC, based on SIM selection rules stored in said ICC.

2. A method according to claim 1, comprising:
- configuring and/or updating said SIM selection rules.

3. A method according to claim 2, comprising:
- said ICC interacting with a remote server for said configuration and/or updating.

4. A method according to any of claims 1 to 3, wherein:
- said SIM selection rules include rules based one or more of different criteria including location-based, time-based, event-based, traffic/application- based criteria.

5. A method according to any of claims 1 to 4, comprising:
- triggering said configuration and/or updating according to one or more of different strategies including: relying on action of the owner of the device hosting said ICC, time-based update, connection-based update, location-based update, server-push update.

6. A method according to any of claims 1 to 5, wherein said ICC corresponds to Universal Integrated Circuit Card UICC, and said Subscriber Identity Modules SIMs include Universal Subscriber Identity Modules USIMs and/or IMS Subscriber Identity Modules ISIMs.

7. An Integrated Circuit Card ICC supporting multiple Subscriber Identity Modules SIMs and comprising:
- a SIM selector module performing SIM selection, based on SIM selection rules,
- means for storing said SIM selection rules.

8. An ICC according to claim 7, comprising:
- means for configuring and/or updating said SIM selection rules.

9. An ICC according to claim 8, comprising:
- means for interacting with a remote server for said configuration and/or updating.

10. A management server comprising:
- means for interacting with an Integrated Circuit Card ICC supporting multiple Subscriber Identity Modules SIMs, for configuration and/or updating of SIM selection rules stored in said ICC.
